# EUROPEAN PATENT SPECIFICATION

(11) **EP 2 106 991 B1**
(45) Date of publication and mention of the grant of the patent: **03.09.2014**
(21) Application number: 09251043.7
(22) Date of filing: 03.04.2009
(51) Int. Cl.: B62J 6/02, B62J 17/02

(54) **Motorcycle**
Motorrad
Motocyclette

(30) Priority: 03.04.2008 JP 2008097495; 05.09.2008 JP 2008227913
(43) Date of publication of application: 07.10.2009
(73) Proprietor: Yamaha Hatsudoki Kabushiki Kaisha, SHIZUOKA-KEN 438-8501 (JP)
(72) Inventor: Masumi, Oosumi, Shizuoka-ken 438-8501 (JP); Naochika, Hashimoto, Shizuoka-ken 438-8501 (JP)
(74) Representative: Zimmermann, Tankred Klaus

(56) References cited:
- JP-A- 11 208 555
- JP-A- 2006 062 553
- JP-A- 2007 030 809
- JP-U- 60 115 190
- JP-U- 60 188 074

## Description

### Field

The present invention relates to a motorcycle and more particularly, but not exclusively, to a motorcycle in which an opening for introducing fresh air is formed in a vehicle body's front portion.

### Background

Depending on the case, a duct including an opening is provided in a vehicle body's front portion of the motorcycle. Such a duct utilizes a travel wind pressure occurring during travel, thereby to introduce fresh air from the opening in the vehicle body's front portion and to then supply it into an engine or the like.

Japanese Unexamined Patent Application Publication No. 2004-106601 discloses a motorcycle provided with a duct opening on each of lateral sides. In the motorcycle, the duct opening is configured from a part of, for example, a headlight or a cowl.

JP11208555 discloses a headlight portion wherein two lamp body parts are paired in the vehicle width direction and are separated from each other and further discloses an air opening at a central position in the vehicle width direction.

JP2006062553 discloses a miniaturized headlamp device comprising valves for light bulbs and light reflectors.

JP60115190 discloses a three-wheeled vehicle wherein the front cowl consists of a front headlight and an air opening.

JP60188074 U discloses a motorcycle having a front cowl opening at a central position for the main headlight portion and a cover for the headlight comprising an air opening.

JP 2007 030809 A discloses a motorcycle according to the preamble of claim 1, which comprises two headlamps disposed left and right from a center of the motorcycle and two position lamps disposed on outer sides of the two headlamps.

### Summary

However, in the conventional motorcycle, since it is difficult to secure a space for forming a relatively large opening in a vehicle's front portion, a fresh-air introduction efficiency is not sufficient.

The present invention has been made in view of the above-described circumstances, and an object thereof is to provide a motorcycle capable of improving a fresh-air introduction efficiency of an opening formed in a vehicle body's front portion.

Viewed from one aspect, the present invention can provide a motorcycle according to claim 1.

This arrangement provides that each cover extending along the vehicle width direction and mounted in the headlight portion receives a relatively high travel wind pressure. Hence, with the openings formed in the covers, an even larger amount of travel wind can be introduced from the openings.

### Brief Description of the Drawings

For a better understanding of the invention and to show how the same may be carried into effect reference is now made by way of example to the accompanying drawings in which:
FIG. 1 is a side view of a motorcycle of one embodiment of the present invention;
FIG. 2 is a front view of the motorcycle of the one embodiment of the present invention;
FIG. 3 is an explanatory exploded perspective view showing a mounting structure of a headlight portion;
FIG. 4 is a front view of the headlight portion including a cover mounted thereto;
FIG. 5 is a front view of the headlight portion;
FIG. 6 is a front view of the cover;
FIG. 7 is a cross-sectional view taken along the line VII-VII of FIG. 6;

FIG. 8 is an explanatory plan view showing the relation between the headlight portions and ducts;

FIG. 9 is an explanatory side view showing the relation between the headlight portions and the ducts; and FIG. 10 is a cross-sectional view taken along the line X-X of FIG. 2.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the present invention as defined by the appended claims.

### Specific Description

Embodiments will now be described with reference to the drawings.

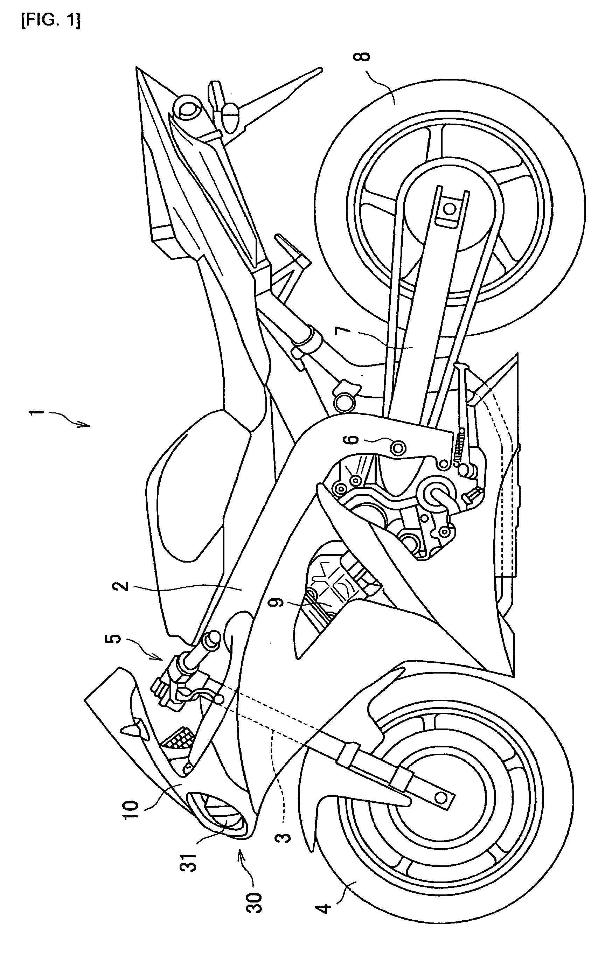

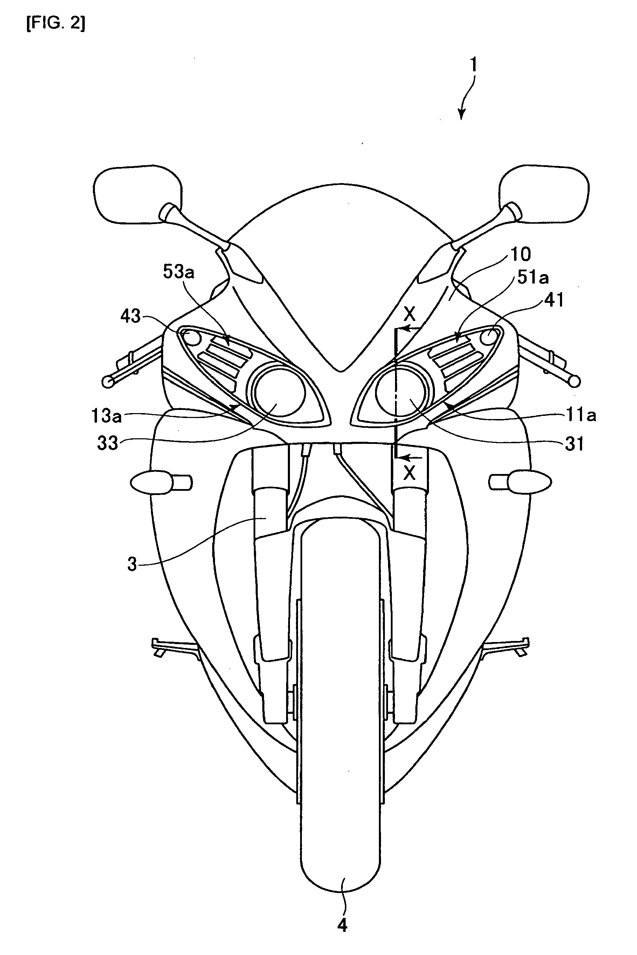

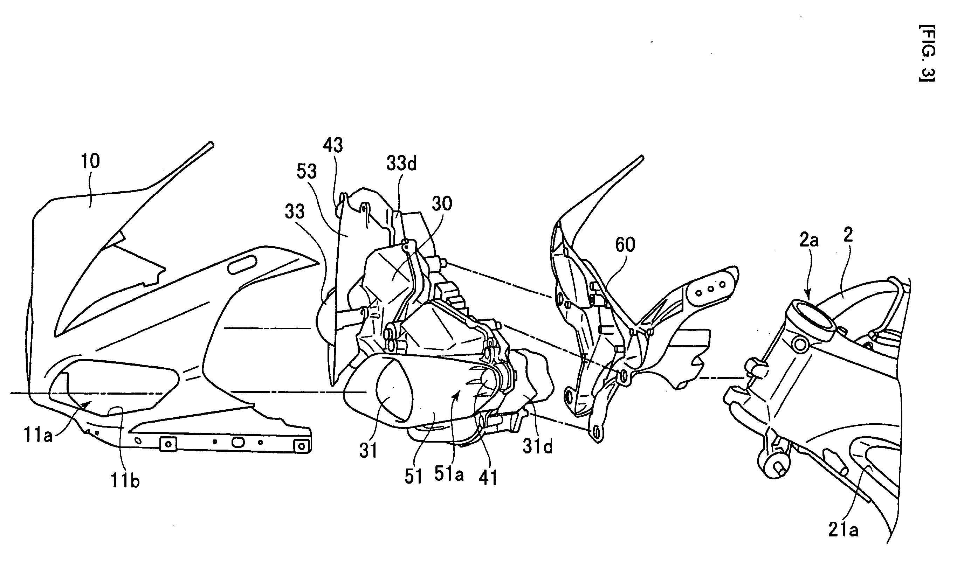

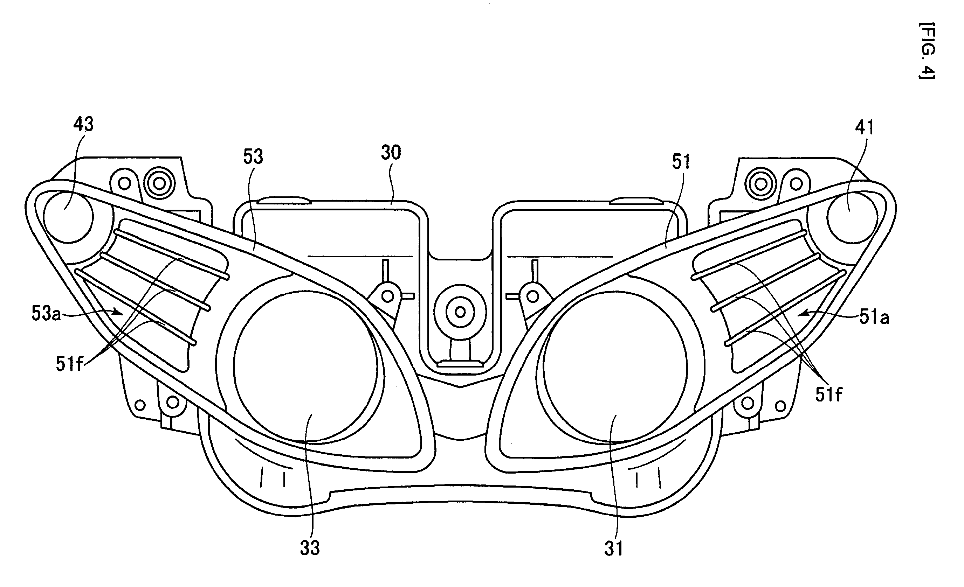

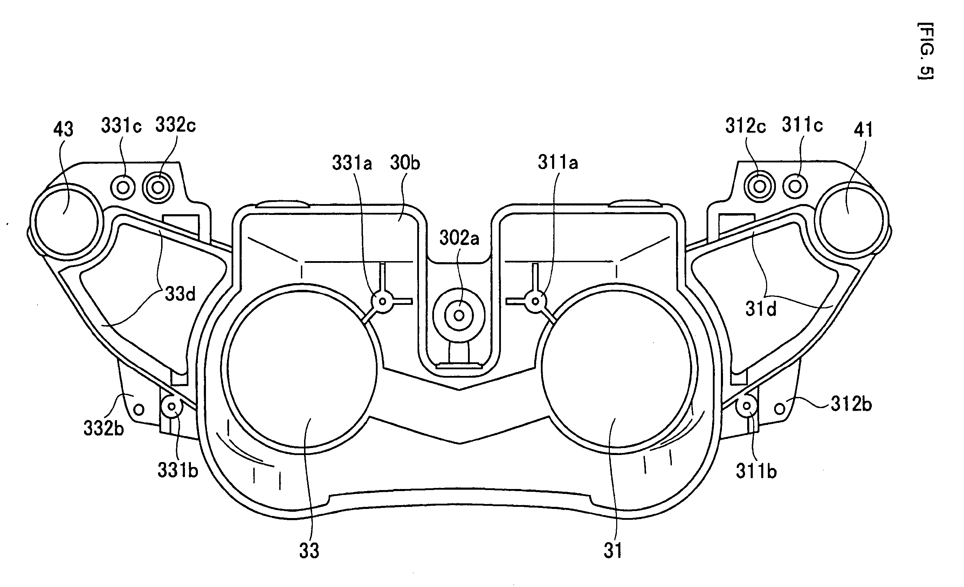

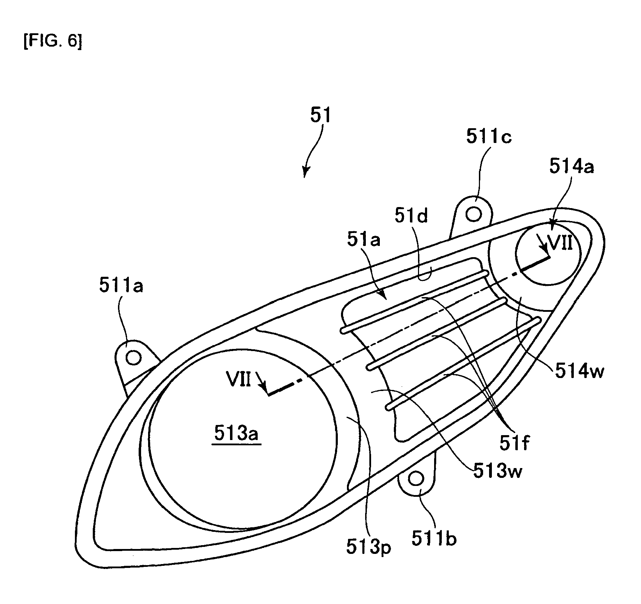

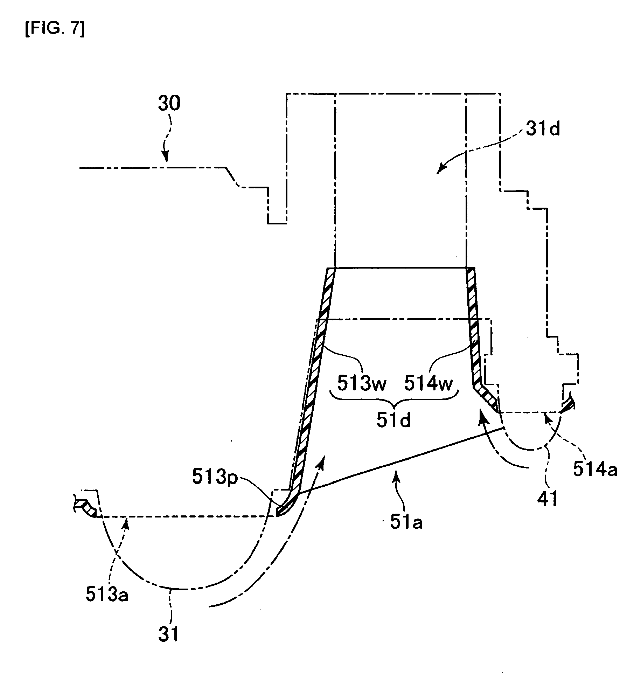

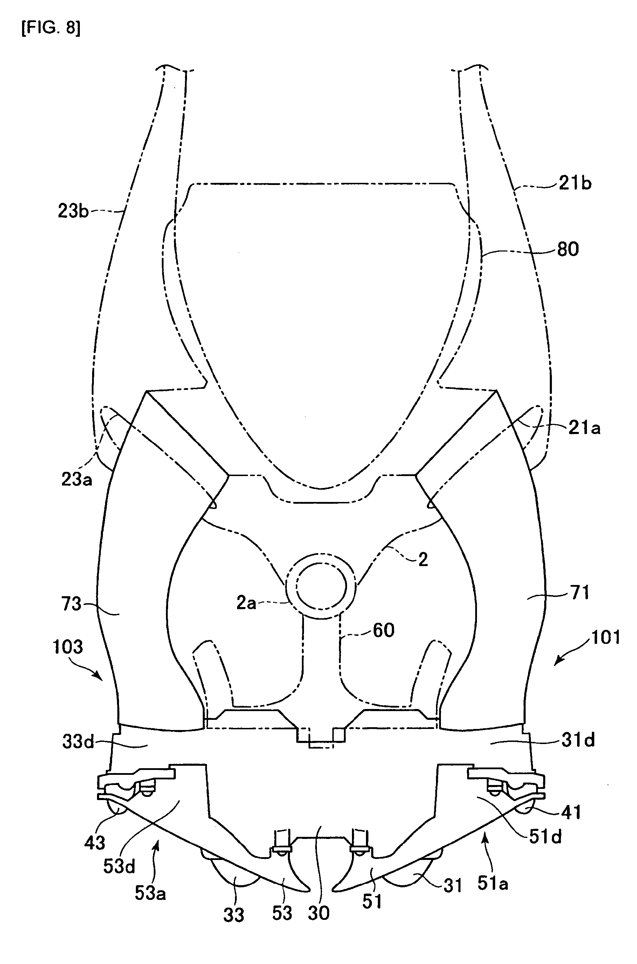

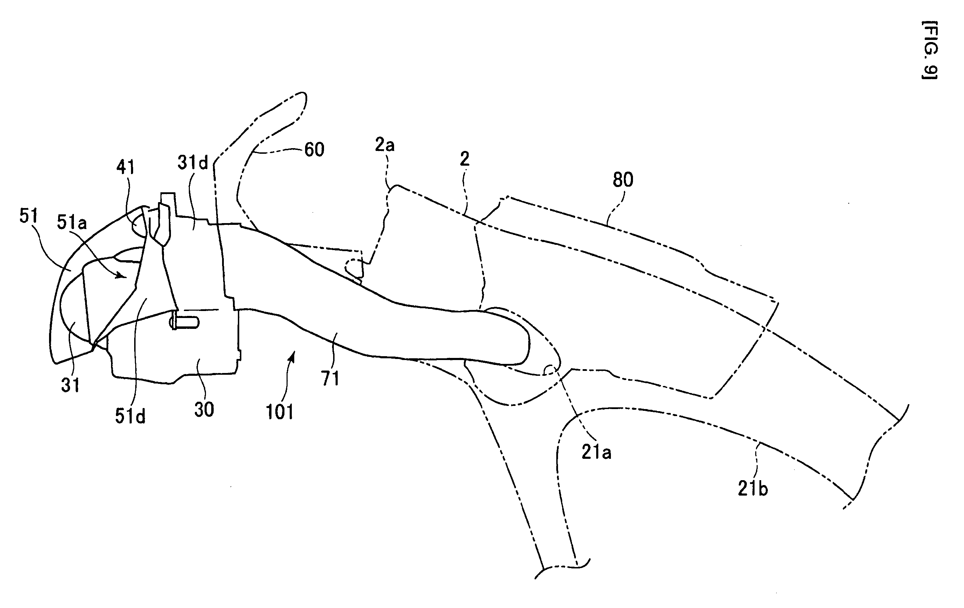

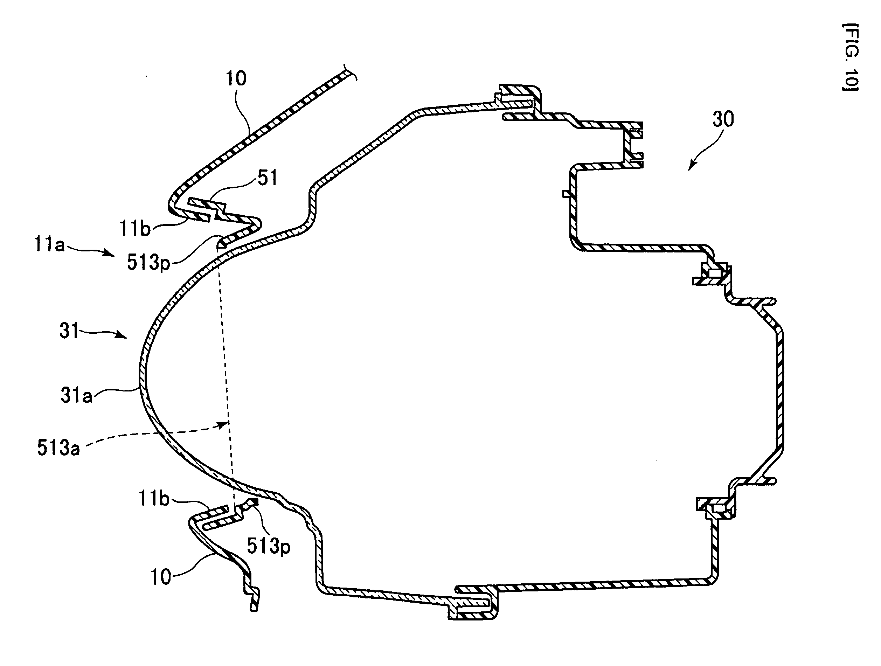

FIGS. 1 and 2, respectively, are a side view and a front view of a motorcycle 1 of one embodiment. FIG. 3 is an explanatory exploded perspective view of a mount structure of a headlight portion 30. FIG. 4 is a front view of the headlight portion 30 to which covers 51 and 53 are mounted. FIG. 5 is a front view of the headlight portion 30. FIG. 6 is a front view of the cover 51. FIG. 7 is a cross-sectional view taken along the line VII-VII of FIG. 6. FIGS. 8 and 9, respectively,
are a plan view and a side view for explaining the relation between the headlight portion 30 and intake ducts 101 and 103. FIG. 10 is a cross-sectional view taken along the line X-X of FIG. 2. In FIG. 10, the interior contents of the headlight portion 30 are not shown.

As shown in FIG. 1, the motorcycle 1 includes a twin-spar-type vehicle body frame 2, in which a front fork 3 extending along an obliquely downward direction is supported in a front end portion of the vehicle body frame 2. A front wheel 4 is pivotally supported in a lower end portion of the front fork 3, and a handlebar 5 is mounted in an upper end portion of the front fork 3. Further, a rear arm 7 extending along the forward-rearward direction is supported by a pivot shaft 6 in a rear end portion of the vehicle body frame 2. A rear wheel 8 is pivotally supported in a rear end portion of the rear arm 7.

Further, as shown in FIG. 2, the motorcycle 1 includes a front cowl 10 covering a vehicle body's front portion. The front cowl 10 has a shape that expands slightly rearward on both sides from a central portion in the vehicle width direction. This shape works to reduce the travel wind pressure imposed on the rider during travel. Further, in the front cowl 10, there are formed light-dedicated openings 11a and 13a arranged on both sides sandwiching the center in the vehicle width direction. Each of the light-dedicated openings 11a and 13a has a shape that extends slightly upward the respective lateral side from the central side in the vehicle width direction.

Headlights 31 and 33 are, respectively, provided in positions close to the center in the vehicle width direction in inside of the light-dedicated openings 11a and 13a. Position lamps 41 and 43 (vehicle width indicating lamps) are, respectively, provided in positions on outer sides in the vehicle width direction. The headlights 31 and 33 and the position lamps 41 and 43 are disposed to face frontward, and hence receive a relatively high travel wind pressure during travel of the vehicle. Further, openings 51a and 53a, respectively, communicating to the intake ducts 101 and 103, which are described below, are provided in positions between the headlights 31 and 33 and the position lamps 41 and 43 in inside of the light-dedicated openings 11a and 13a.

As shown in FIG. 3, the headlights 31 and 33 and the position lamps 41 and 43 are provided in the common headlight portion 30 (headlight unit). The front cowl 10 is mounted in such a manner as to cover a front side of the headlight portion 30. Further, the headlight portion 30 is mounted in a front portion of the vehicle body frame 2 via a bracket 60. Here, as shown in FIG. 4, the covers 51 and 53 having shapes corresponding to the respective light-dedicated opening 11a and 13a of the front cowl 10 are mounted in the headlight portion 30.

As shown in FIG. 5, the headlight portion 30 includes a box-shaped portion 30b in the central portion. The headlights 31 and 33 arranged along the vehicle width direction are provided to the front face of the box-shaped portion 30b. Light sources of the respective headlights 31 and 33 and circuits for activating them are stored in the box-shaped portion 30b. The headlights 31 and 33 have substantially hemispheric shapes protruding frontward, thereby to emit headlight beams frontward.

The headlight portion 30 further includes duct portions 31d and 33d on both sides of the box-shaped portion 30b in the vehicle width direction. Each of the duct portions 31d and 33d has a hollow shape having a hollow portion extending along the vehicle forward-rearward direction, thereby forming a midway portion of each of the respective intake ducts 101 and 103 described further below. Further, the duct portions 31d and 33d, respectively, extend slightly upward on the lateral sides of the box-shaped portion 30b in the vehicle width, and end portions thereof are equipped with the respective position lamps 41 and 43. More specifically, the duct portions 31d and 33d, respectively, are support members that support the position lamps 41 and 43 in the positions spaced apart from the headlights 31 and 33 in the vehicle width direction.

Further, the headlight portion 30 includes a mount portion 302a in a central portion of the box-shaped portion 30b. The headlight portion 30 further includes mount portions 312b and 312c and 332b and 332c in the upper and lower portions of the respective duct portions 31d and 33d, and the headlight portion and cowl are mounted in a screw-fixing manner to the front cowl 10 in those portions.

Further, as shown in FIG. 6, in the cover 51 mounted in the headlight portion 30, a circular light-dedicated opening 513a corresponding to the headlight 31 is formed in a position close to the center in the vehicle width direction. In addition, there is formed a circular lamp-dedicated opening 514a corresponding to the position lamp 41 in a position on the outer side in the vehicle width direction. The cover 51 is mounted to the front side of the headlight portion 30 so that the front portions of the headlight 31 and the position lamp 41 respectively protrude from the light-dedicated opening 513a and the circular lamp-dedicated opening 514a (see FIGS. 4 and 7).

Further, in a portion between the light-dedicated opening 513a and the lamp-dedicated opening 514a, the cover 51 includes a hollow-shaped duct portion 51d extending along a vehicle's rearward direction and penetrating in this direction. The duct portion 51d forms a front end portion of the intake duct 101, which is described further below, and is mounted to a front side of the duct portion 31d of the headlight portion 30 (see FIG. 7). Further, a front end portion of the duct portion 51d forms the opening 51a of the intake duct 101 described further below.

As shown in FIG. 7, in the duct portion 51d, a wall portion 513w on the side of the light-dedicated opening 513a is inclined along a direction departing from an opposite wall portion 514w towards the light-dedicated opening 513a formed in the front end portion. Similarly, also the wall portion 514w (especially a front end portion) on the side of the lamp-dedicated opening 514a is inclined along a direction departing from the opposite wall portion 513w towards the lamp-dedicated opening 514a formed in the front end portion. More specifically, the wall portions 513w and 514w opposite to each other in the vehicle width direction in the duct portion 51d are formed so that the distance therebetween increases frontward.

Further, the light-dedicated opening 513a and the lamp-dedicated opening 514a are, respectively, formed in front end portions of the wall portions 513w and 514w constituting the duct portion 51d, and the front portions of the headlight 31 and the position lamp 41 protrude forward from these openings, respectively. Hence, the front portions of the headlight 31 and the position lamp 41 protrude more frontward than the opening 51a formed in the front end portion of the duct portion 51d and the position lamp 41.

Further, the cover 51 includes an annular protection portion 513p surrounding the light-dedicated opening 513a. The protection portion 513p surrounds the side of a base end of the substantially hemispheric headlight 31 protruding frontward from the light-dedicated opening 513a. The protection portion 513p is disposed so that there is a slight clearance between the protection portion 513p and the headlight 31. The protection portion 513p will be described in more detail below.

Further, in the cover 51, there are formed multiple planar blade portions 51f extending from the side of the headlight 31 to the side of the position lamp 41 and transversely extending across the inside of the duct portion 51d in such a manner as to bridge between the wall portions 513w and 514w constituting the duct portion 51d. The blade portions 51f are partition portions disposed to partition the opening 51a in the front view.

Further, the cover 51 includes on an outer sidewall thereof, mount portions 511a, 511b, and 511c for the use of screw-fixing to the headlight portion 30. The positions thereof correspond to those of mount portions 311a, 311b, and 311c provided in the headlight portion 30 (see FIG. 5).

While the cover 51 mounted to the left side of the headlight portion 30 has been described above, also the cover 53 mounted on the right side has a shape similar thereto.

Next, as shown in FIGS. 8 and 9, ducts 71 and 73 constituting rear half portions of the intake ducts 101 and 103 are, respectively, mounted in rear end portions of the duct portions 31d and 33d provided on both sides of the headlight portion 30 in the vehicle width direction. The ducts 71 and 73 respectively extend rearward and are connected to an air cleaner 80 supported by the vehicle body frame 2.

More specifically, the vehicle body frame 2 includes a cylindrical head pipe 2a supporting the front fork 3 in the front end portion thereof, and main frames 21b and 23b separated leftward and rightward and extending obliquely downward and rearward from the head pipe 2a. The air cleaner 80 is provided between the main frames 21b and 23b. Further, duct openings 21a and 23a allowing for insertion of the ducts 71 and 73 are formed in the main frames 21b and 23b, respectively. The ducts 71 and 73 are bent slightly inward after being passed through both lateral sides of the head pipe 2a and are inserted into the duct openings 21a and 23a, and the rear end portion of the ducts 71 and 73 are connected to the air cleaner 80. The air cleaner 80 filters introduced fresh air and supplies the air into an engine 9 (see FIG. 1).

The intake ducts 101 and 103 are, respectively, configured from, sequentially from the sides of the openings 51a and 53a, the duct portions 51d and 53d formed in the covers 51 and 53, the duct portions 31d and 33d formed in the headlight portion 30, and the ducts 71 and 73.

As shown in FIG. 2, according to the present embodiment, the intake ducts 101 and 103 and the openings 51a and 53a are, respectively, formed between the headlights 31 and 33 and the position lamps 41 and 43 where the travel wind pressure being received during travel is relatively high, so that an even more amount of fresh air can be introduced into the intake ducts 101 and 103. As a consequence, the intake efficiency of the engine 9 can be improved.

Further, as shown in FIG. 7, according to the present embodiment, in the duct portion 51d formed in the cover 51, the front side of the wall portion 513w on the side of the light-dedicated opening 513a is inclined along the direction departing from the wall portion 514w having the front side opposing thereto. Similarly, also the wall portion 514w on the side of the lamp-dedicated opening 514a is inclined along the direction departing from the opposite wall portion 513w having the front side opposing thereto. Thus, the wall portions 513w and 514w opposite to each other in the vehicle width direction in the duct portion 51d forming a front end portion of the intake duct 101 are formed so that the distance therebetween increases frontward. Hence, the area size of the opening 51a formed in the front end portion is increased. Consequently, an increased amount of fresh air can be introduced.

Further, as shown in FIG. 7, according to the present embodiment, the front portions of the respective headlight 31 and position lamp 41 protrude more forward than the opening 51a formed in the front end portion of the duct portion 51d. Hence, as shown in FIG. 7, part of travel wind received by the headlight 31 and the position lamp 41 can be caused to flow along the outer faces thereof into the duct portion 51d. Thereby, a range enabling the introduction of fresh air can be substantially expanded.

Further, as shown in FIG. 5, according to the present embodiment, the position lamps 41 and 43 are, respectively, supported by the duct portions 31d and 33d extending along the vehicle width direction from the headlight portion 30. More specifically, the support members for supporting the position lamps 41 and 43 serve also as parts of the intake ducts 101 and 103, so that the number of components/parts can be reduced.

Further, as shown in FIG. 4, according to the present embodiment, the openings 51a and 53a are, respectively, formed in the covers 51 and 53 mounted to the headlights 31 and 33 and the position lamps 41 and 43 from the front sides. According to the above, the openings 51a and 53a are defined in accordance with the shapes of the covers 51 and 53. Hence, as described above, the area sizes of the respective openings 51a and 53a can easily be increased.

Further, as shown in FIG. 4, according to the present embodiment, the blade portions 51f and 53f (partition portions), which are, respectively, disposed in such a manner to partition the openings 51a and 53a in the front view, are provided in the covers 51 and 53. Hence, relatively large dusts or the like can be prevented from entering inside of the intake ducts 101 and 103. Further, the blade portions 51f and 53f, respectively, have the planar shapes extending along the vehicle's rear side direction (that is, fresh air introduction direction). Hence, fresh air to be introduced into the intake ducts 101 and 103 can be rectified. Further, since the blade portions 51f and 53f are, respectively, provided to extend from the sides of the headlights 31 and 33 to the position lamps 41 and 43, the stiffness therebetween in the vehicle width direction can be increased.

Further, as shown in FIG. 4, according to the present embodiment, the headlight portion 30 includes the two headlights 31 and 33 disposed along the vehicle width direction. In this case, the central portion in the vehicle width direction that includes the headlights 31 and 33 can be expanded to be relatively large. Hence, a relatively large amount of travel wind to be received by the central portion can be directed in the vehicle width direction by the headlights 31 and 33, and can be taken in from the openings 51a and 53a located on the both sides thereof.

As shown in FIG. 10, the headlight portion 30 has, on a front face thereof, a transmissive portion 31a (transmissive cover) having transmissivity, in which the headlight beam is emitted to the outside through the transmissive portion 31a. In the transmissive portion 31a, a surface located more rearward than the light-dedicated opening 513a formed in the cover 51 is coated to prevent leakage of light. Further, the protection portion 513p provided in the cover 51 is interposed between an inner circumference edge portion 11b of the front cowl 10 and the transmissive portion 31a, and covers an area of the transmissive portion 31a exposed to the inner circumference edge portion 11b. Hence, the transmissive portion 31a can be prevented from being damaged by the inner circumference edge portion 11b of the front cowl 10. Further, a material softer than the front cowl 10 is used for the cover 51, thereby making it possible to further prevent the transmissive portion 31a from being damaged.

Further, the protection portion 513p of the cover 51 is disposed to form a small clearance between the protection portion 513p and the inner circumference edge portion 11b of the front cowl 10. Hence, even when the front cowl 10 vibrates during travel, the vibration can be prevented from being transferred to the protection portion 513p, so that the transmissive portion 31a can also be prevented from being damaged by the protection portion 513p.

Further, the protection portion 513p of the cover 51 is disposed also to form a small clearance between the protection portion 513p and the transmissive portion 31a. As described above, in the mount portions 511a, 511b, and 511c, the cover 51 is fixed to the mount portions 311a, 311b, and 311c provided in the headlight portion 30. Hence, even when a vibration is caused during travel, changes in the clearance between the protection portion 513p and the transmissive portion 31a are inhibited. Consequently, even the transmissive portion 31a can be inhibited from being damaged by the protection portion 513p.

A motorcycle 1 of the present embodiments as described above includes the headlight portion 30 that is provided in the front portion of the vehicle body, that includes on a front face thereof the transmissive portion 31a having transmissivity and that emits the headlight beam to the outside through the transmissive portion 31a; the front cowl 10 that includes the opening 11a in the position corresponding to the transmissive portion 31a and that cover the front portion of the vehicle body; and the cover 51 that is fixed to the mount portions 311a, 311b, and 311c provided in the headlight portion 30 and that is interposed between the inner circumference edge portion 11b of the front cowl forming the opening 11a and the transmissive portion 31a.

### Description of Reference Numerals

1: motorcycle; 2: vehicle body frame; 3: front fork; 4: front wheel; 5: handlebar; 6: pivot shaft; 7: rear arm; 8: rear wheel; 9: engine; 10: front cowl; 11a, 13a: light-dedicated opening; 11b: inner circumference edge portion; 30: headlight portion; 31, 33: headlight; 31d, 33d: duct portion (support member); 41, 43 position lamp; 51, 53: cover; 51a, 53a: opening; 51d: duct portion; 51f, 53f blade portion (partition portion); 513a: light-dedicated opening; 513p: protection portion; 60: bracket; 71, 73: duct; 80: air cleaner; and 101, 103: intake duct.

## Claims

1. A motorcycle comprising:
a headlight portion (30) which is provided in a front portion of a vehicle body;
a right headlight (33) and a left headlight (31) which are provided in the headlight portion (30) on a right side and a left side of the motorcycle in a vehicle width direction and a right position lamp (43) and a left position lamp (41) which are provided in the headlight portion (30) apart from the headlights (31, 33) on outer sides in the vehicle width direction, **characterized in that**
a right cover (53) and a left cover (51) are mounted to the headlight portion (30) on the right and left side of the motorcycle in the vehicle width direction and extend along the vehicle width direction, wherein an opening (51a, 53a) for introducing fresh air is formed in each cover (51, 53) between the respective headlight (31, 33) and the respective position lamp (41, 43).

2. The motorcycle according to claim 1, wherein the openings (51a, 53a) are formed in the covers (51, 53) on upper and lateral sides of the headlight portion (30).

3. The motorcycle according to claim 1 or 2, further comprising a duct (101, 103) arranged to guide fresh air introduced from one of the openings (51a, 53a) into an engine.

4. The motorcycle according to any preceding claim, wherein at least a part of each headlight (31, 33) protrudes more frontward than the respective opening (51a, 53a).

5. The motorcycle according to any preceding claim, wherein at least a part of each position lamp (41, 43) protrudes more frontward than the respective opening (51a, 53a).

6. The motorcycle according to claim 3, further comprising a support member (31d, 33d) extending along the vehicle width direction from one of the headlights (31,33) to support the respective position lamp (41, 43), wherein at least a part of the duct (101, 103) is formed in the support member (31d, 33d).

7. The motorcycle according to any preceding claim, wherein the covers (51, 53) are mounted on a front side with respect to the headlights (31,33) and the position lamps (41, 43).

8. The motorcycle according to any preceding claim, wherein each cover (51, 53) includes a partition portion (51f) disposed to partition the respective opening (51a, 53a) .

9. The motorcycle according to any preceding claim, further comprising a front cowl (10) that includes light-dedicated openings (11a, 13a) each corresponding to a transmissive portion having transmissivity and provided on a front face of the headlight portion (30) and that covers a front portion of the vehicle body, wherein each cover (51, 53) is fixed to a mount portion provided in the headlight portion (30) and is interposed between an inner circumference edge portion of the front cowl (10) forming the respective light-dedicated opening (111a, 13a) and the respective transmissive portion of the headlight portion (30).

10. The motorcycle according to claim 9, wherein each cover (51, 53) is disposed to form a clearance between the cover (51, 53) and the inner circumference edge portion of the front cowl (10) forming the respective light-dedicated opening (11a, 13a).

11. The motorcycle according to claim 9 or 10, wherein each cover (51, 53) is disposed to form a clearance between the cover (51, 53) and the respective transmissive portion of the headlight portion (30).

## Patentansprüche

1. Ein Motorrad, das folgende Merkmale aufweist:
einen Scheinwerferabschnitt (30), der in einem vorderen Abschnitt eines Fahrzeugkörpers vorgesehen ist;
einen rechten Scheinwerfer (33) und einen linken Scheinwerfer (31), die in dem Scheinwerferabschnitt (30) auf einer rechten Seite und einer linken Seite des Motorrads in einer Fahrzeugbreiterichtung vorgesehen sind, und eine rechte Positionslampe (43) und eine linke Positionslampe (41), die außer den Scheinwerfern (31, 33) in dem Scheinwerferabschnitt (30) auf Außenseiten in der Fahrzeugbreiterichtung vorgesehen sind, **dadurch gekennzeichnet, dass**
eine rechte Abdeckung (53) und eine linke Abdeckung (51) an dem Scheinwerferabschnitt (30) auf der rechten und linken Seite des Motorrads in der Fahrzeugbreiterichtung befestigt sind und sich entlang der Fahrzeugbreiterichtung erstrecken, wobei eine Öffnung (51 a, 53a) zum Einführen frischer Luft in jeder Abdeckung (51, 53) zwischen dem jeweiligen Scheinwerfer (31, 33) und der jeweiligen Positionslampe (41, 43) gebildet ist.

2. Das Motorrad gemäß Anspruch 1, bei dem die Öffnungen (51a, 53a) in den Abdeckungen (51, 53) auf oberen und seitlichen Seiten des Scheinwerferabschnitts (30) gebildet sind.

3. Das Motorrad gemäß Anspruch 1 oder 2, das ferner einen Kanal (101, 103) aufweist, der angeordnet ist, um Frischluft, die von einer der Öffnungen (51 a, 53a) eingeführt wird, in einen Motor zu führen.

4. Das Motorrad gemäß einem der vorhergehenden Ansprüche, bei dem zumindest ein Teil jedes Scheinwerfers (31, 33) weiter nach vorne vorsteht als die jeweilige Öffnung (51a, 53a).

5. Das Motorrad gemäß einem der vorhergehenden Ansprüche, bei dem zumindest ein Teil jeder Positionslampe (41, 43) weiter nach vorne vorsteht als die jeweilige Öffnung (51 a, 53a).

6. Das Motorrad gemäß Anspruch 3, das ferner ein Tragebauglied (31 d, 33d) aufweist, das sich entlang der Fahrzeugbreiterichtung von einem der Scheinwerfer (31, 33) erstreckt, um die jeweilige Positionslampe (41, 43) zu tragen, wobei zumindest ein Teil des Kanals (101, 103) in dem Tragebauglied (31 d, 33d) gebildet ist.

7. Das Motorrad gemäß einem der vorhergehenden Ansprüche, bei dem die Abdeckungen (51, 53) auf einer Vorderseite bezüglich der Scheinwerfer (31, 33) und der Positionslampen (41, 43) befestigt sind.

8. Das Motorrad gemäß einem der vorhergehenden Ansprüche, bei dem jede Abdeckung (51, 53) einen Teilungsabschnitt (51f) umfasst, der angeordnet ist, um die jeweilige Öffnung (51 a, 53a) zu teilen.

9. Das Motorrad gemäß einem der vorhergehenden Ansprüche, das ferner eine vordere Verkleidung (10) aufweist, die für Licht bestimmte Öffnungen (11a, 13a) umfasst, die jeweils einem durchlässigen Abschnitt entsprechen, der einen Durchlässigkeitsgrad aufweist und auf einer vorderen Fläche des Scheinwerferabschnitts (30) vorgesehen ist, und der einen Vorderabschnitt des Fahrzeugkörpers bedeckt, wobei jede Abdeckung (51, 53) an einem Befestigungsabschnitt fixiert ist, der in dem Scheinwerferabschnitt (30) vorgesehen ist, und zwischen einem Innenumfangsrandabschnitt der vorderen Verkleidung (10), der die jeweilige für Licht bestimmte Öffnung (11a, 13a) bildet, und dem jeweiligen durchlässigen Abschnitt des Scheinwerferabschnitts (30) angeordnet ist.

10. Das Motorrad gemäß Anspruch 9, bei dem jede Abdeckung (51, 53) angeordnet ist, um einen Zwischenraum zu bilden zwischen der Abdeckung (51, 53) und dem Innenumfangsrandabschnitt der vorderen Verkleidung (10), der die jeweilige für Licht bestimmte Öffnung (11a, 13a) bildet.

11. Das Motorrad gemäß Anspruch 9 oder 10, bei dem jede Abdeckung (51, 53) angeordnet ist, um zwischen der Abdeckung (51, 53) und dem jeweiligen durchlässigen Abschnitt des Scheinwerferabschnitts (30) einen Zwischenraum zu bilden.

## Revendications

1. Motocyclette, comprenant:
une partie de phare (30) qui est prévue dans une partie avant d'une carrosserie de véhicule;
un phare droit (33) et un phare gauche (31) qui sont prévus dans la partie de phare (30) d'un côté droit et d'un côté gauche de la motocyclette dans un sens de la largeur de véhicule, et un feu de position droit (43) et un feu de position gauche (41) qui sont prévus dans la partie de phare (30), éloignés des phares (31, 33) de côtés extérieurs dans le sens de la largeur de véhicule,
**caractérisée par le fait que**
un couvercle droit (53) et un couvercle gauche (51) sont montés sur la partie de phare (30) du côté droit et du côté gauche de la motocyclette dans le sens de la largeur du véhicule et s'étendent dans le sens de la largeur de véhicule, où une ouverture (51a, 53a) pour introduire de l'air frais est formée dans chaque couvercle (51, 53), entre le phare respectif (31, 33) et le feu de position respectif (41, 43).

2. Motocyclette selon la revendication 1, dans laquelle les ouvertures (51a, 53a) sont formées dans les couvercles (51, 53) des côtés supérieur et latéral de la partie de phare (30).

3. Motocyclette selon la revendication 1 ou 2, comprenant par ailleurs un conduit (101, 103) aménagé pour guider l'air frais introduit depuis l'une des ouvertures (51a, 53a) vers un moteur.

4. Motocyclette selon l'une quelconque des revendications précédentes, dans laquelle au moins une partie de chaque phare (31, 33) ressort plus vers l'avant que l'ouverture respective (51a, 53a).

5. Motocyclette selon l'une quelconque des revendications précédentes, dans laquelle au moins une partie de chaque feu de position (41, 43) ressort plus vers l'avant que l'ouverture respective (51a, 53a).

6. Motocyclette selon la revendication 3, comprenant par ailleurs un élément de support (31d, 33d) s'étendant, dans le sens de la largeur de véhicule, depuis l'un des phares (31, 33) pour supporter le feu de position respectif (41, 43), où au moins une partie du conduit (101, 103) est formée dans l'élément de support (31d, 33d).

7. Motocyclette selon l'une quelconque des revendications précédentes, dans laquelle les couvercles (51, 53) sont montés d'un côté avant par rapport aux phares (31, 33) et aux feux de position (41, 43).

8. Motocyclette selon l'une quelconque des revendications précédentes, dans laquelle chaque couvercle (51, 53) comporte une partie de cloison (51f) disposée de manière à diviser l'ouverture respective (51a, 53a).

9. Motocyclette selon l'une quelconque des revendications précédentes, comprenant par ailleurs un capot avant (10) qui comporte des ouvertures dédiées à la lumière (11a, 13a) correspondant, chacune, à une partie de transmission présentant une transmissibilité et prévues sur une face avant de la partie de phare (30), et qui recouvre une partie avant de la carrosserie de véhicule, où chaque couvercle (51, 53) est fixé à une partie de montage prévue dans la partie de phare (30) et est interposé entre une partie de bord circonférentiel intérieur du capot avant (10) formant l'ouverture dédiée à la lumière respective (11a, 13a) et la partie de transmission respective de la partie de phare (30).

10. Motocyclette selon la revendication 9, dans laquelle chaque couvercle (51, 53) est disposé de manière à former un jeu entre le couvercle (51, 53) et la partie de bord circonférentiel intérieur du capot avant (10) formant l'ouverture dédiée à la lumière respectif (11a, 13a) .

11. Motocyclette selon la revendication 9 ou 10, dans laquelle chaque couvercle (51, 53) est disposé de manière à former un jeu entre le couvercle (51, 53) et la partie de transmission respective de la partie de phare (30).
